# DEMANDE DE BREVET EUROPEEN

(11) **EP 3 890 197 A1**
(43) Date de publication de la demande: **06.10.2021**
(21) Numéro de dépôt: 21162217.0
(22) Date de dépôt: 12.03.2021
(51) Int. Cl.: H04B 5/00

(54) **SYSTÈME DE COMMUNICATION SANS FIL**

(30) Priorité: 01.04.2020 FR 2003238
(71) Demandeur: Schneider Electric Industries SAS, 92500 Rueil-Malmaison (FR)
(72) Inventeur: DESSALES, Denis, 16110 Marillac-le-Franc (FR); CHAUVET, Francis, 16440 MOUTHIERS (FR)
(74) Mandataire: Schneider Electric

(57) **Abrégé**

L'invention concerne un système de communication radio fréquence courte distance entre un module maître et plusieurs modules esclaves amovibles, le système de communication comportant une ligne électrique principale raccordée au module maître et disposant de plusieurs emplacements de couplage, caractérisé en ce que le système de communication comprend plusieurs lignes électriques secondaires disposant chacune d'une première zone de couplage pour un couplage directionnel entre ladite ligne secondaire et la ligne principale au niveau d'un emplacement de couplage, et d'une seconde zone de couplage pour un couplage directionnel entre ladite ligne secondaire et un module esclave, la seconde zone de couplage étant distincte de la première zone de couplage.

## Description

### Domaine technique de l'invention

La présente invention concerne un système de communication par radio fréquence courte distance permettant à un équipement de communiquer avec plusieurs modules amovibles à l'aide d'une liaison sans fil. Cette invention peut en particulier être appliquée à un système modulaire de dialogue homme/machine comprenant une pluralité d'organes de dialogue communiquant avec un module maître. Ces différents organes de dialogue sont par exemple des boutons poussoirs ou commutateurs, des organes de signalisation visuelle ou sonore (voyant, buzzer,...), des capteurs ou détecteurs, etc...

### Etat de la technique

Les documents EP2479646 et EP2781993 décrivent déjà un système modulaire dans lequel plusieurs organes de dialogue homme/machine esclaves peuvent communiquer avec un module maître. Ces organes de dialogue sont prévus pour être montés sur un module support lequel peut dialoguer avec le module maître. Les organes de dialogue sont montés de manière amovible et interchangeable, ce qui rend la solution facilement évolutive.

La liaison entre les modules esclaves et le module support est filaire et la liaison entre le module support et le module maître peut être filaire ou sans fil par onde radio. Cependant, les solutions décrites dans ces documents nécessitent l'utilisation du module support intermédiaire et, dans le cas d'une liaison sans fil, génèrent des ondes radio soumises à des perturbations, en particulier si les organes de dialogue sont montés sur une armoire métallique. De plus, Il peut aussi y avoir des perturbations mutuelles entre plusieurs systèmes modulaires ou entre plusieurs modules esclaves.

D'autres solutions basées notamment sur les technologies NFC, RFID ou diviseur de Wilkinson (Wilkinson Power Divider) sont jugées trop chères, trop encombrantes pour une telle application et/ou ayant un débit qui peut s'avérer trop faible quand on veut gérer une quantité importante de modules esclaves.

Un des buts de l'invention est donc de trouver une solution simple, peu encombrante et économique pour faire communiquer plusieurs modules esclaves directement avec un module maître grâce à une liaison sans fil, c'est-à-dire sans contact électrique. Le nombre de modules esclaves est avantageusement variable, c'est-à-dire qu'il est possible à tout moment de retirer, de remplacer ou d'ajouter très facilement un ou plusieurs modules esclaves.

Un autre but de l'invention est de limiter fortement la portée de la communication sans fil afin d'éviter qu'un tel système de communication ne perturbe l'environnement, en particulier par l'émission d'ondes radio, qu'il ne soit perturbé par l'environnement, comme par d'éventuels émetteurs situés à proximité (par exemple des émetteurs wifi), et afin d'éviter aussi que deux systèmes côte à côte puissent s'auto-perturber.

### Exposé de l'invention

Pour cela, l'invention décrit un système de communication radio fréquence entre un module maître et plusieurs modules esclaves amovibles, le système de communication comportant une ligne électrique principale qui est raccordée au module maître et qui dispose de plusieurs emplacements de couplage, caractérisé en ce que le système de communication comprend plusieurs lignes électriques secondaires disposant chacune d'une première zone de couplage pour un couplage directionnel entre ladite ligne secondaire et la ligne principale au niveau d'un emplacement de couplage, et d'une seconde zone de couplage pour un couplage directionnel entre ladite ligne secondaire et un module esclave, la seconde zone de couplage étant distincte de la première zone de couplage.

Selon une caractéristique, la première zone de couplage et la seconde zone de couplage de chaque ligne secondaire sont de forme rectiligne, ou ont des formes en dents de scie.

Selon une autre caractéristique, chaque ligne secondaire possède deux terminaisons ayant des impédances de fin de ligne égales à l'impédance caractéristique de ladite ligne secondaire. La ligne principale est raccordée à une extrémité au module maître et à l'autre extrémité à une impédance de fin de ligne adaptée pour s'accorder à l'impédance caractéristique de la ligne principale.

Selon une autre caractéristique, la ligne principale et les lignes secondaires sont des pistes conductrices intégrées dans un même circuit imprimé principal. Selon une autre caractéristique, la ligne principale et les lignes secondaires sont situées dans un même plan du circuit imprimé principal.

Selon une autre caractéristique, le système de communication comprend également plusieurs modules esclaves, et un module esclave comporte un circuit imprimé auxiliaire doté d'une piste conductrice et qui est placé au-dessus du circuit imprimé principal en vis-à-vis de la seconde zone de couplage lorsque le module esclave est en communication avec le module maître.

Selon une autre caractéristique, la longueur de la première zone de couplage et la longueur de la seconde zone de couplage sont fonction de la fréquence de travail de la ligne radio.

Selon une autre caractéristique, les couplages directionnels au niveau de la première zone de couplage et de la seconde zone de couplage sont des couplages capacitifs et inductifs.

### Brève description des figures

D'autres caractéristiques vont apparaître dans la description détaillée qui suit faite en regard des dessins annexés dans lesquels :
- La figure 1 montre un schéma simplifié d'un système de communication conforme à l'invention.
- La figure 2 détaille une vue en coupe selon un axe X du couplage entre la ligne principale et une ligne secondaire.
- La figure 3 détaille une vue en coupe selon un axe Y du couplage entre une ligne secondaire et un module esclave.
- La figure 4 montre une forme alternative d'une ligne secondaire.
- La figure 5 montre une forme alternative de la ligne principale.

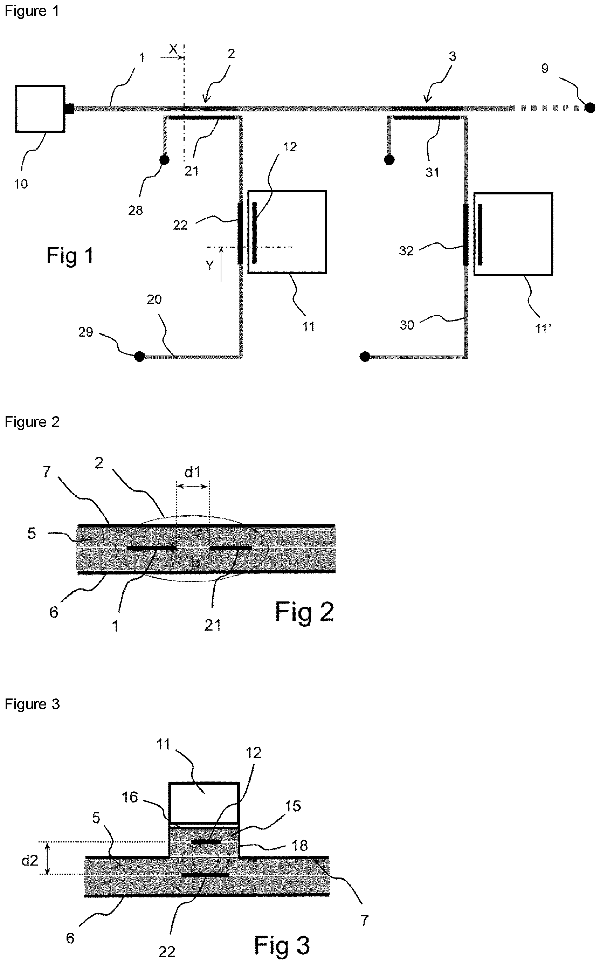

En référence à la figure 1, un système de communication radio fréquence sans fil courte distance a pour but de faire communiquer un module maître 10 avec plusieurs modules esclaves 11, 11' au sein d'une application d'automatisme. Le module maître 10 peut être par exemple un équipement d'automatisme de type automate programmable ou microcontrôleur disposant d'un composant électronique (ou chip) pour émission/réception radio. La communication entre maître et esclaves peut se faire selon différents protocoles de communication, du moment que ces protocoles aient un débit suffisant pour l'application recherchée et une fréquence de transmission qui n'impose pas des longueurs de lignes électriques trop importantes. Par exemple, on peut utiliser un protocole tel que Bluetooth ou Zigbee dont les composants sont peu onéreux, comme un composant du type BLE (Bluetooth Low Energy). Les modules esclaves 11, 11' sont par exemple des organes de dialogue homme/machine, de type bouton poussoir ou commutateur, organe de signalisation visuelle ou sonore (voyant, buzzer,...), et/ou des capteurs ou détecteurs, qui disposent également d'un composant pour émission/réception radio.

Il est fréquent de vouloir faire évoluer une application d'automatisme en changeant ou ajoutant des organes de dialogue homme/machine, en fonction par exemple des besoins du client utilisateur. De plus, il est avantageux de pouvoir remplacer un organe par un autre pour diverses raisons, notamment de maintenance.

Pour obtenir un tel système modulaire, évolutif et facilement modifiable, les modules esclaves sont montés et raccordés de façon amovible, c'est-à-dire que l'on peut facilement retirer, remplacer ou ajouter un module esclave sans perturber la communication sans fil entre le module maître 10 et les autres modules esclaves. De même, grâce à la solution retenue dans l'invention, la présence ou l'absence d'un module esclave 11 sur un emplacement n'a pas d'influence sur les communications des autres modules esclaves avec le module maître 10.

Le système de communication comporte pour cela une ligne électrique principale de transmission 1 qui est raccordée d'un côté au composant radio du module maître 10 soudé sur le circuit imprimé 5 (par exemple à l'aide d'un trou métallisé, appelé via) et de l'autre côté à une impédance de terminaison 9 pour notamment éviter les ondes réfléchies. Cette ligne de transmission principale 1 dispose de plusieurs emplacements de couplage 2, 3 qui sont positionnés à différents endroits le long de la ligne principale 1. Sur la figure 1, seuls un premier emplacement de couplage 2 et un deuxième emplacement de couplage 3 sont représentés pour des raisons de simplification du schéma. La ligne principale 1 est de préférence réalisée par une piste conductrice qui est placée à l'intérieur d'un circuit imprimé multicouches (ou PCB : Printed Circuit Board) comme détaillé plus loin. L'impédance de terminaison 9 est par exemple de 50 Ohms et la ligne principale doit aussi avoir une impédance caractéristique précise, typiquement de 50 Ohms. Cette impédance caractéristique est essentiellement déterminée par la largeur et l'épaisseur de cuivre de la piste ainsi que l'épaisseur du diélectrique du PCB et sa permittivité électrique.

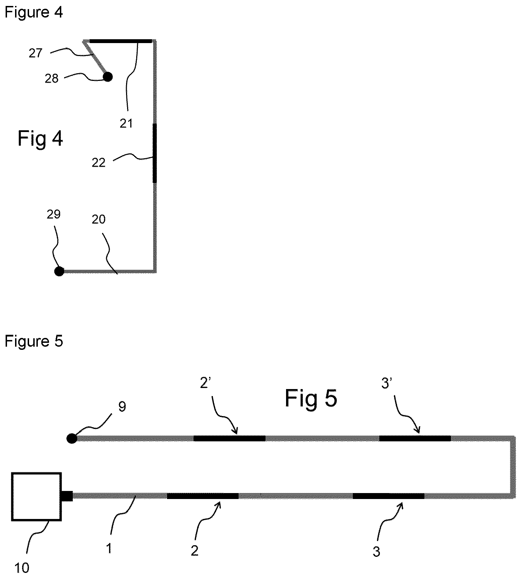

La figure 5 montre un autre mode de réalisation de ligne principale 1 avec une piste conductrice en forme de U ayant deux longueurs reliées ensemble, une première extrémité du U étant raccordée au module maître 10 et l'autre extrémité du U à l'impédance de terminaison 9. Ceci permet de pouvoir mettre plus d'emplacements de couplage 2, 3, 2', 3' sur la ligne 1 et donc de raccorder un nombre plus important de modules esclaves dans un encombrement réduit. D'autres formes pour la ligne principale 1 sont bien évidemment facilement envisageables.

Le système de communication comprend également plusieurs lignes électriques secondaires de transmission. La figure 1 montre une première ligne de transmission secondaire 20 et une deuxième ligne de transmission secondaire 30. Chaque ligne secondaire 20 (respectivement 30) dispose d'une première zone de couplage 21 (respectivement 31) permettant de réaliser un couplage directionnel avec la ligne principale 1 au niveau d'un emplacement de couplage 2 (respectivement 3).

Avantageusement, la présence de lignes secondaires de transmission (permettant la transmission des communications radio entre les modules esclaves et le module maître), non raccordées électriquement à la ligne principale, procure une solution simple qui permet d'éviter de désadapter la ligne principale (et donc d'avoir des performances potentiellement instables ou variables) en fonction du nombre et de la présence ou non de modules esclaves raccordés au système de communication.

D'une façon générale, un couplage directionnel est un dispositif passif qui dévie une partie d'un signal circulant dans une ligne de transmission primaire vers une ligne de transmission secondaire. Dans le présent document, l'expression "couplage directionnel" est utilisée pour signifier que le couplage entre deux lignes électriques proches l'une de l'autre pour effectuer les communications se fait de façon capacitive et également de façon inductive. Ces couplages directionnels sont réalisés avec des lignes électriques qui sont par exemple de type "microstrip" ou de préférence "stripline".

Dans le mode de réalisation présenté, la ligne principale et la ligne secondaire sont de préférence rectilignes, sensiblement parallèles entre elles et à faible distance l'une de l'autre au niveau des emplacements de couplage 2,3 et au niveau des zones de couplage 21, 31, de façon à obtenir un bon couplage. Cependant, au lieu d'une forme rectiligne, d'autres formes sont également possibles comme des formes en zig-zag ou dents de scie, ce qui permettrait de limiter la longueur géométrique de ces zones tout en conservant une longueur électrique satisfaisante et compatible avec la longueur d'onde utilisée.

La figure 2 montre une vue en coupe transversale du circuit imprimé 5, appelé circuit imprimé principal, réalisée au niveau de l'emplacement de couplage 2, selon un axe X de la figure 1. On voit que la ligne principale 1 se situe dans le même plan horizontal du circuit imprimé 5 que la zone de couplage 21 de la ligne secondaire 20. Avantageusement, la ligne principale 1 et les lignes secondaires 20, 30 sont des pistes conductrices intégrées dans le même circuit imprimé 5, ce qui simplifie la réalisation du système de communication.

Le circuit imprimé principal 5 est multicouches et composé de deux pistes externes conductrices 6, 7 en cuivre qui sont électriquement reliées à un potentiel zéro (0V) du circuit imprimé pour faire un écran et limiter ainsi la propagation des ondes radio. Le circuit imprimé 5 comporte aussi des pistes conductrices internes en cuivre formant la ligne principale 1 et les lignes secondaires 20, 30. Le circuit imprimé 5 peut par exemple être fabriqué à partir d'un PCB standard à quatre couches conductrices, dans lequel on retire par rognage une des deux couches internes de cuivre, et dans lequel on adapte l'épaisseur des couches isolantes, faites généralement à base de pré-imprégné et de résine époxyde, pour que la piste conductrice interne restante de cuivre se situe au milieu du circuit imprimé 5, c'est-à-dire sensiblement à mi-distance entre les pistes conductrices externes 6 et 7. A titre d'exemple, l'épaisseur des pistes conductrices externes peut être de 17µm, celle des pistes conductrices internes de 35µm, avec une épaisseur complète du circuit imprimé d'environ 1,6 mm. Typiquement, au niveau de l'emplacement de couplage 2, la première zone de couplage 21 possède par exemple une longueur de 10 mm et la distance d1 entre la ligne principale 1 et la première zone de couplage 21 de la ligne secondaire 20 est par exemple de 0,7 mm.

Chaque ligne secondaire 20 (respectivement 30) comporte également une seconde zone de couplage 22 (respectivement 32) permettant de réaliser un couplage directionnel entre ladite ligne secondaire et un module esclave 11 (respectivement 11'), lorsque celui-ci est présent à proximité de cette seconde zone de couplage.

La figure 3 montre une vue en coupe transversale du circuit imprimé principal 5 réalisée au niveau de la seconde zone de couplage 22 de la ligne secondaire 20, selon un axe Y de la figure 1. Chaque module esclave 11 comporte un circuit imprimé 15, dit circuit imprimé auxiliaire, qui présente une piste conductrice interne 12, de préférence rectiligne, située entre deux couches isolantes d'épaisseur sensiblement égale et faites à base de pré-imprégné et de résine époxyde. Une couche conductrice 16 en cuivre est placée sur la partie supérieure du circuit imprimé auxiliaire 15 du module esclave 11. Cependant, afin d'assurer un couplage efficace entre la piste conductrice interne 12 et la seconde zone de couplage 22, la partie inférieure du circuit imprimé auxiliaire 15 ne comporte pas de couche conductrice. De même le circuit imprimé principal 5 ne comporte pas de couche métallique supérieure 7 au niveau des différentes secondes zones de couplage 22, 32, sur une surface d'environ 10 mm par 10 mm, cette surface étant évidemment dépendante de la taille des modules esclaves.

Lorsqu'on veut connecter un module esclave 11 avec le module maître 10, il suffit donc simplement de placer le module esclave 11 sur le circuit imprimé principal 5, de telle sorte que le circuit imprimé auxiliaire 15 du module esclave 11 soit situé juste au-dessus de la seconde zone de couplage 22 de la ligne secondaire 20, ce qui permet de coupler la piste conductrice interne 12 du circuit imprimé auxiliaire 15 avec la seconde zone de couplage 22 de la ligne secondaire 20. Ainsi, la communication radio entre le module maître 10 et le module esclave 11 se fera donc d'une part au travers du couplage directionnel entre la piste conductrice interne 12 et la seconde zone de couplage 22 et d'autre part au travers du couplage directionnel entre la première zone de couplage 21 et la ligne principale 1.

Contrairement à ce que pourrait laisser penser la figure 1 qui représente un schéma simplifié montrant une vue d'ensemble du système de communication, la piste conductrice interne 12 du circuit imprimé auxiliaire 15 et la seconde zone de couplage 22 de la ligne secondaire 20 sont donc dans deux plans distincts, alors que la ligne principale 1 et la première zone de couplage 21 de la ligne secondaire 20 sont dans un même plan, comme le détaillent bien les figures 2 et 3.

Typiquement, la seconde zone de couplage 22 possède par exemple une longueur de 10 mm et la distance d2 entre la seconde zone de couplage 22 et la piste conductrice interne 12 est par exemple de l'ordre de 1 mm. De plus, la piste conductrice de la ligne secondaire 20 est préférentiellement plus large au niveau de la zone de couplage 22. D'une façon générale, il est clair que plus la distance d2 est faible et plus la longueur et la largeur de la zone de couplage 22 sont importantes, meilleur sera le couplage. On peut donc jouer sur ces différents paramètres pour optimiser le couplage par rapport à des contraintes et dimensions existantes.

Par ailleurs, dans le mode de réalisation de la figure 3, pour améliorer encore la continuité électrique et pallier au retrait de la couche métallique supérieure 7 au niveau de la seconde zone de couplage 22, le module esclave 11 peut être monté dans un boîtier métallique qui surmonte le circuit imprimé auxiliaire 15 et qui possède de chaque côté deux jambes métalliques 18 qui viennent en contact de la couche métallique supérieure 7, pour faire écran lorsque le module esclave 11 est en place. La distance entre la piste conductrice interne 12 et le module esclave 11 peut être de l'ordre de 5mm et la piste conductrice interne 12 est électriquement raccordée avec le composant radio du module esclave 11, par exemple à l'aide d'un via dans le circuit imprimé auxiliaire. On pourrait également envisager un mode de réalisation avec de simple tôles découpées, en lieu et place des couches de cuivre reliées au 0V.

Les zones de couplage font ainsi office d'antenne pour les émissions radio, ce qui fait que les communications entre maître et esclaves restent confinées au maximum au niveau des différents emplacements de couplage et zones de couplage grâce notamment aux écrans, le système de communication ne perturbe pas et n'est pas perturbé par l'environnement.

L'alimentation électrique des modules esclaves 11, 11' peut être réalisée par différents moyens non détaillés dans le présent document, comme par exemple une pile/batterie ou une alimentation par induction magnétique. Signalons par ailleurs qu'une alimentation par induction magnétique se fait la plupart du temps en basse fréquence qui est donc éloignée des bandes concernées par les modules radio (ex : 2.4 GHz) et donc ne générera pas de perturbation sur le système de communication.

Chaque ligne secondaire 20 doit comporter des terminaisons 28, 29 qui sont chargées par des impédances de fin de ligne égales à l'impédance caractéristique de la ligne secondaire, par exemple de 50 ohms, de façon à éviter la réflexion des ondes au sein des lignes de transmission. La figure 1 montre que chaque ligne secondaire 20, 30 est faite de plusieurs segments rectilignes qui sont raccordés bout-à-bout. Dans le mode de réalisation décrit, on a vu que la longueur de la première zone de couplage 21 et de la seconde zone de couplage 22 est de l'ordre de 10 mm et leur largeur est de l'ordre de 1 mm. Par ailleurs, la longueur de la zone de couplage 22 de la ligne secondaire 20 doit être optimisée en tenant compte de la longueur d'onde utilisée pour les communications radio, à savoir une fréquence de travail de 2,4 GHz dans le mode de réalisation décrit, de l'épaisseur du circuit imprimé principal 5, des paramètres diélectriques du substrat et de la largeur des zones de couplage. Typiquement une longueur totale d'environ 3 cm pour la ligne secondaire 20 donne des résultats satisfaisants.

La configuration des segments de chaque ligne secondaire peut prendre plusieurs formes différentes et dépend notamment de l'encombrement disponible pour le circuit imprimé 5 et de l'optimisation des différents couplages. La figure 4 montre une alternative d'une ligne secondaire 20 dans laquelle un des segments terminaux 27 présente un angle aigu avec la première zone de couplage 21 et non pas un angle droit comme dans le mode réalisation de la figure 1, ce qui présente comme avantage un gain de place potentiel pour faire passer d'autres pistes électriques (non concernées par le présent système de communication) sur le même circuit imprimé PCB.

## Revendications

1. Système de communication radio fréquence entre un module maître (10) et plusieurs modules esclaves amovibles (11, 11'), le système de communication comportant une ligne électrique principale (1) qui est raccordée au module maître et qui dispose de plusieurs emplacements de couplage (2, 3), **caractérisé en ce que** le système de communication comprend plusieurs lignes électriques secondaires (20, 30) disposant chacune d'une première zone de couplage (21, 31) pour un couplage directionnel entre ladite ligne secondaire et la ligne principale (1) au niveau d'un emplacement de couplage (2, 3), et d'une seconde zone de couplage (22, 32) pour un couplage directionnel entre ladite ligne secondaire et un module esclave (11, 11'), la seconde zone de couplage (22, 32) étant distincte de la première zone de couplage (21, 31).

2. Système de communication selon la revendication 1, **caractérisé en ce que** la première zone de couplage (21, 31) et la seconde zone de couplage (22, 32) de chaque ligne secondaire (20, 30) sont de forme rectiligne.

3. Système de communication selon la revendication 1, **caractérisé en ce que** la première zone de couplage (21, 31) ou la seconde zone de couplage (22, 32) de chaque ligne secondaire (20, 30) ont des formes en dents de scie.

4. Système de communication selon la revendication 1, **caractérisé en ce que** chaque ligne secondaire (20) possède deux terminaisons ayant des impédances de fin de ligne (28, 29) égales à l'impédance caractéristique de ladite ligne secondaire (20).

5. Système de communication selon la revendication 1, **caractérisé en ce que** la ligne principale (1) est raccordée à une extrémité au module maître (10) et à l'autre extrémité à une impédance de fin de ligne (9) adaptée pour s'accorder à l'impédance caractéristique de la ligne principale (1).

6. Système de communication selon la revendication 1, **caractérisé en ce que** la ligne principale (1) et les lignes secondaires (20, 30) sont des pistes conductrices intégrées dans un même circuit imprimé principal (5).

7. Système de communication selon la revendication 6, **caractérisé en ce que** la ligne principale (1) et les lignes secondaires (20, 30) sont situées dans un même plan du circuit imprimé principal (5).

8. Système de communication selon la revendication 6 comprenant également plusieurs modules esclaves, **caractérisé en ce qu'**un module esclave (11) comporte un circuit imprimé auxiliaire (15) doté d'une piste conductrice (12) et qui est placé au-dessus du circuit imprimé principal (5) en vis-à-vis de la seconde zone de couplage (22) lorsque le module esclave (11) est en communication avec le module maître (10).

9. Système de communication selon la revendication 1, **caractérisé en ce que** la longueur de la première zone de couplage (21, 31) et la longueur de la seconde zone de couplage (22, 32) sont fonction de la fréquence de travail de la ligne radio.

10. Système de communication selon la revendication 1, **caractérisé en ce que** le module maître et les modules esclaves communiquent entre eux par le protocole Zigbee ou par le protocole Bluetooth.

11. Système de communication selon l'une des revendications précédentes, **caractérisé en ce que** les couplages directionnels au niveau de la première zone de couplage et de la seconde zone de couplage sont des couplages capacitifs et inductifs.
